# EUROPEAN PATENT APPLICATION

(11) **EP 2 410 593 A1**
(43) Date of publication of application: **25.01.2012**
(21) Application number: 11173070.1
(22) Date of filing: 07.07.2011
(51) Int. Cl.: H01M 2/16, H01M 10/052, H01M 10/0566, H01M 10/0525, H01M 10/0568, H01M 10/0569, H01M 10/0587

(54) **Lithium secondary battery**

(30) Priority: 13.07.2010 KR 20100067401
(71) Applicant: Samsung SDI Co., Ltd., Yongin-si, Gyeonggi-do (KR)
(72) Inventor: Cha, Sung-Youp, CHEONAN-SI, Chungcheongnam-do (KR)
(74) Representative: Salou, Clarisse

(57) **Abstract**

The invention relates to a secondary battery (10) including an electrode assembly (100) and an electrolyte contained in a case (200). The electrode assembly (100) includes an anode plate (110), a cathode plate (120) and a separator (130) having an air permeability comprised between 75 and 200 s/100mL. The electrolyte contains an organic solvent and a lithium salt at a concentration of about 0.5 M to about 1 M in the organic solvent.

## Description

### Field of the Invention

The present disclosure relates to a lithium secondary battery.

### Discussion of Related Art

In a secondary battery, an electrode assembly typically includes an anode plate, a cathode plate, and a separator interposed between the electrode plates. The separator prevents electrical connection between the electrode plates from occurring while allowing electrolyte and lithium salt passing through the separator. The lithium salt generates electricity by chemical reactions with materials formed on the electrode plates.

### SUMMARY

One aspect of the present invention provides a secondary battery comprising an electrode assembly and an electrolyte contained in a sealed case (or can). The electrode assembly includes an anode plate, a cathode plate and a separator. According to embodiments of the invention, the electrolyte contains a lithium salt at certain concentrations to provide improved safety without reducing the capacity of the battery. Also, in some embodiments of the present invention, certain level of porosity in the separator advantageously provides improved safety without compromising the battery capacity. Further, in some other embodiments of the present invention, the secondary battery achieves advantageously high safety and particularly excellent compression properties with certain levels of air permeability of the separator.

The secondary battery of the invention comprises: an electrode assembly comprising a first electrode plate, a second electrode plate and a separator interposed between the first and second electrode plates; an electrolyte comprising an organic solvent and a lithium salt at a concentration of about 0.5 M to about 1 M in the organic solvent; and a case accommodating the electrode assembly and the electrolyte therein.

In the secondary battery, the first electrode plate may comprise a first current collector and a first active material layer formed on a portion of the first current collector, while the first active material layer is not formed on another portion of the first current collector. The second electrode plate may comprise a second current collector and a second active material layer formed on a portion of the second current collector, while the second active material layer is not formed on another portion of the second current collector.

In the secondary battery according to the invention, the separator may usually have a plurality of pores. Preferably, the porosity of the separator is from about 25 % to about 65 %, more preferably is from about 40 % to about 50 %. The air permeability of the separator may be from about 75 sec/100 cc to about 200 sec/100 cc, preferably from about 75 sec/100 cc to about 100 sec/100 cc.

Preferably according to the invention, the lithium salt is at least any one (component) selected from the group consisting of LiPF₆, LiBF₄, LiSbF₆, LiAsF₆, LiClO₄, LiCF₃SO₃, LiN(SO₂CF₃)₂, LiN(SO₂C₂F₅)₂, LiC(SO₂CF₃)₃, LiN(SO₃CF₃)₂, LiC₄F₉SO₃, LiAlO₄, LiAlCl₄, LiCl and LiI. The lithium salt is more preferably LiPF₆. The lithium salt has a concentration from about 0.8 M to about 1.0 M. The electrolyte may also comprise a non-aqueous organic solvent.

In the secondary battery according to the invention, the organic solvent may comprise at least one (component) selected from the group consisting of a carbonate solvent, an ether solvent, an ester solvent, and a ketone solvent. The carbonate solvent is preferably at least one (component) selected from the group consisting of dimethly carbonate, diethyl carbonate, dipropyl carbonate, methylpropyl carbonate, ethylmethyl carbonate, ethlypropyl carbonate, ethylene carbonate, propylene carbonate, 1,2-butylene carbonate, 2,3-butylene carbonate, 1,2-penthylene carbonate and 2,3-penthylene carbonate. The ester solvent is preferably at least one (component) selected from the group consisting of methyl acetate, ethyl acetate, propyl acetate, methyl propionate, ethyl propionate, γ-butyrolactone, γ-balerolactone, γ-caprolactone, δ-balerolactone, and ε-caprolactone. The ether solvent is preferably at least one (component) selected from the group consisting of tetrahydrofuran, 2-methyltetrahydrofuran, and dibutylether. The ketone solvent is preferably polymethylvinyl ketone.

### BRIEF DESCRIPTION OF THE DRAWINGS

The accompanying drawings illustrate exemplary embodiments of the present invention, and, together with the description, serve to explain various features and embodiments of the present invention.

FIG. 1 is an exploded perspective view of a secondary battery according to an embodiment of the present invention; and

FIG. 2 is a perspective view of an electrode assembly according to said embodiment of the present invention.

### DETAILED DESCRIPTION OF EMBODIMENTS

In the following detailed description, only certain exemplary features and embodiments of the present invention are shown and described, simply by way of illustration. As those skilled in the art would realize, the described embodiments may be modified in various different ways, all without departing from the spirit or scope of the present invention and without departing from the claims appearing later in this disclosure. Accordingly, the drawings and description are to be regarded as illustrative in nature and not restrictive.

In this disclosure, when an element is referred to as being "on" another element, it can be directly on the other element or be indirectly on the other element with one or more intervening elements interposed therebetween. Also, when an element is referred to as being "connected to" another element, it can be directly connected to the other element or be indirectly connected to the other element with one or more intervening elements interposed therebetween. Hereinafter, like reference numerals refer to like elements. In the drawings, the size or thickness of certain elements may be exaggerated or reduced for the convenience of description and clarity, and may be different from the thickness or size of the actual elements.

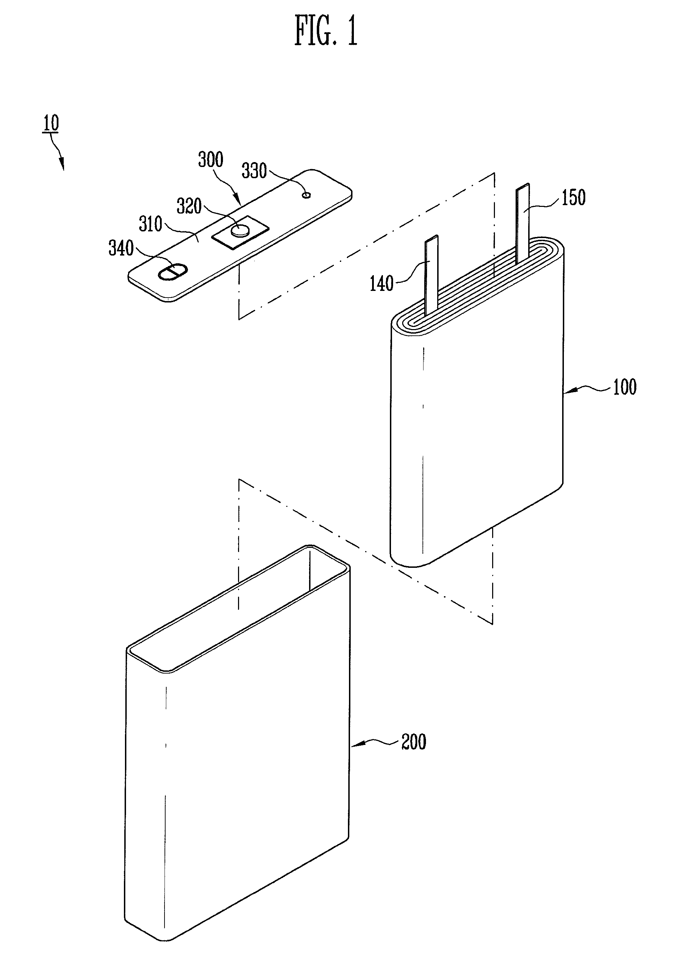

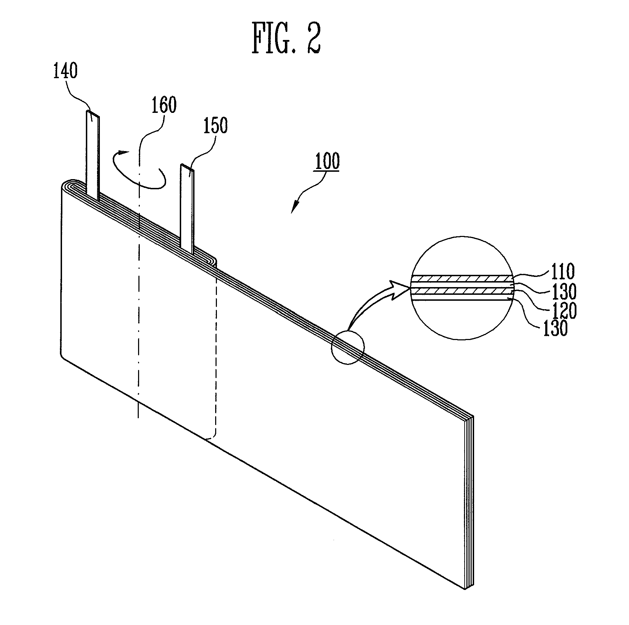

FIGS. 1 and 2 illustrate a secondary battery 10 according to an embodiment of the present invention. FIG. 1 illustrates connections and arrangement of major components of the secondary battery including an electrode assembly 100. FIG. 2 illustrates a detailed view of electrode assembly 100 of FIG. 1.

In FIG. 1, the rectangular secondary battery 10 includes the electrode assembly 100, a case 200, and a cap assembly 300. The electrode assembly 100 is received in the case 200 having an open top. The cap assembly 300 covers the open top of the case 200. The electrode assembly 100 has a multi-layered structure, which will be discussed below in more detail. Two electrode leads (first electrode lead 140 and second electrode lead 150) extend out of the multi-layered structure of the electrode assembly 100. The cap assembly 300 includes a cap plate 310, a cathode pin 320, an electrolyte injection hole 330 and a safety vent 340, which will be discussed later in more detail.

Referring to the enlarged portion of FIG. 2, the electrode assembly 100 includes a stacked structure of a first electrode plate 110, a second electrode plate 120, and two separator layers 130. In the illustrated embodiment, one separator 130 is located between the first and second electrode plates 110 and 120, and the other separator 130 is at the bottom below the second electrode plate 120. Further referring to Figure 2, the stacked structure is wound, folded or rolled to wrap the earlier wound portion of the same stacked structure. Thus, as the stacked structure wraps the earlier wound portion, the separator 130 appearing under the second electrode plate 120 in the enlarged circle of Figure 2 will contact the first electrode plate 110 and therefore will also be interposed between the first and second electrode plates 110 and 120.

Although not illustrated, the first and second electrode plates 110, 120 are electrically connected to the first and second electrode leads 140, 150, respectively. The first and second electrode leads 140 and 150 electrically connect the electrode assembly 100, more specifically the first and second electrode plates 110 and 120, to other components of the battery 10.

Each of the first and second electrode plates 110 and 120 can work as anode or cathode in terms of electrochemistry. For the sake of convenience, however, the first electrode plate 110 is referred to as "anode plate" and the second electrode plate 120 is referred to as "cathode plate" hereinafter. Thus, in some embodiments of the invention, the first electrode plate 110 as illustrated and discussed in this disclosure can be cathode plate, vice versa.

In embodiments, the anode plate 110 includes an anode current collector (not illustrated) and an anode active material layer that is formed only on a portion of the anode current collector, while not formed on some other portion(s) of the anode current collector. In other words, the anode current collector has a surface on which the anode active material layer is coated and another surface on which the anode active material layer is not coated. In some embodiments, no layer at all is coated on the portion(s) where the anode active material layer is not formed.

In embodiments, the anode current collector is a thin layer or foil comprising a material having high electrical conductivity. The material for the anode current collector is not specifically limited as long as it does not cause chemical changes or reactions. For example, the anode current collector may be made of aluminum, nickel, titanium, or calcination carbon.

In embodiments, the anode active material layer includes an anode active material, which is a layered compound containing lithium. In embodiments, the anode active material layer further includes a conductive agent for improving conductivity of the layer and a binder for improving bonding between the layered compound and the conductive agent. In embodiments, the anode active material layer is formed by mixing the anode active material, the conductive agent, and the binder with a solvent to provide a slurry and then by applying the slurry onto only a portion of the anode current collector. Preferably, the solvent may be NMP (N-Methyl-2-Pyrrolidone), the anode active material may be lithium cobalt oxide (LiCoO₂), the conductive agent may be acetylene black, and binder may be polyvinylidene fluoride, but they are not limited thereto.

In embodiments, the cathode plate 120 includes a cathode current collector (not illustrated) and a cathode active material layer that is formed only on a portion of the cathode current collector and not formed on some other portion(s) of the cathode current collector. In other words, the cathode current collector has a surface on which the cathode active material layer is coated and another surface on which the cathode active material layer is not coated. In some embodiments, no layer at all is coated on the portion(s) where the cathode active material layer is not formed.

In embodiments, the cathode current collector is a thin layer or foil comprising a conductive metal. For example, the cathode current collector may be made of copper, stainless steel, aluminum, and nickel. In embodiments, the cathode active material layer is formed by mixing a cathode active material, a binder and a thickener with a solvent to provide a slurry and then by applying the slurry onto only a portion of the cathode current collector. Preferably, the solvent may be water, the cathode active material may be graphite, the binder may be styrene-butadiene, and the thickener may be carboxymethylcellulose, but they are not limited thereto.

When graphite is used for the cathode active material, the anode plate 110 corresponding to the cathode plate 120 may have a smaller area than the cathode plate 120. On the other hand, when tin oxide (SnO) or lithium titanium oxide (ITO) is used for the cathode active material, the anode plate corresponding to the cathode plate may have a larger area than the cathode plate.

The separator 130 is interposed between the anode plate 110 and the cathode plate 120. The separator 130 usually allows ions to move between the anode plate 110 and cathode plate 120 and prevents physical and electrical contact between the anode plate 110 and the cathode plate 120. Therefore, it is preferable that the separator 130 is an insulating thin film having high ion transmittance and mechanical strength. For example, materials used for the separator 130 includes, but not limited to, polyolefin-based polymer films, such as polypropylene, polyethylene, polyethylene/polypropylene, polyethylene/polypropylene/polyethylene, polypropylene/polyethylene/polypropylene, multi-layered films made of one or more polyolefin-based polymer films, a microporous film, fabric, and non-woven fabric. Further, a film coated with polymer resin may be used for the porous polyolefin film.

As described above, the separator 130 generally provides a path for ions travel between the electrode plates 110, 120 while preventing electrical contact between the electrode plates 110, 120. Therefore, it is preferable that the separator 130 is an insulator having small electric resistance, with an electrolyte impregnated therein. Further, it is preferable that the separator 130 can cut the battery circuit by blocking the micropores when large current flows due to an internal or external short circuit.

The battery performance is influenced by various properties of the separator 130 which include the thickness, film structure, air permeability, porosity, and pore size. The air permeability and porosity are relatively easily measured. In embodiments, the porosity of the separator 130 is 25% to 65%, and preferably 45%. When the porosity it too small, ions usually do not move freely between the two electrode plates and may have some adverse effect on the performance of the battery. On the other hand, when the porosity is too high, there is generally a risk of short circuit and the battery may become less safe.

Air permeability is linked to the time required for passing a predetermined amount of air through a predetermined size of the separator 130 under predetermined pressure. The size of the pores is under one µm to prevent lithium dendrite from growing and to prevent a short circuit due to foreign substances. The air permeability is given as a ratio of the empty portion to the entire volume of the separator 130.

As shown in FIG. 2, the electrode assembly 100 is formed by winding the stacked structure including the anode plate 110, the cathode plate 120 and the separator 130 about a winding axis 160. The electrode assembly 100 then is accommodated in the rectangular case 200, as shown in FIG. 1. In this configuration, an electrolyte is accommodated in the case 200 along with the electrode assembly 100 and the opening of the case 200 is sealed by a cap assembly 300.

Referring to FIG. 1, the cap assembly 300 has a cap plate 310, which includes electrolyte injection hole 330 and safety vent 340.The cathode pin 320 is provided on the cap plate 310 and is electrically connected to the second electrode lead 150 to function as a cathode terminal. Although not illustrated, the second electrode lead 150 is bent, for example, zigzag under the cap plate 310. Although not illustrated, in embodiments, the second electrode lead 150 is typically welded to the cathode pin 320 from under the cap plate 310. On the other hand, in embodiments, the first electrode lead 140 is welded to the cap plate 310. In embodiments, the first and second electrode leads 140, 150 are welded using arc welding or laser welding, while arc welding is more common.

In the illustrated embodiment, the electrolyte injection hole 330 is formed through the cap plate 310 at one side thereof. An electrolyte is injected through the electrolyte injection hole 330, after the cap assembly 300 is placed over the top of the battery case 200. Thereafter, in embodiments, the electrolyte injection hole 300 is sealed by fitting and welding a sealing member. Although not limited thereto, the sealing member is a ball-shaped mother material made of aluminum-containing metal. Further in the illustrated embodiment, the safety vent 340 is formed in the cap plate 310 at the opposite side of the electrolyte injection hole 330. The safety vent 340 is provided to allow discharging of gas from the battery 10, when the internal pressure exceeds certain high pressure.

Although not illustrated, in some other embodiments, the lithium secondary battery of the present invention may be provided in other shapes, including a cylindrical shape and a pouch shape.

The secondary battery 10 as shown in FIGS. 1 and 2 is generally manufactured by accommodating the electrode assembly 100 within the case200 along with the electrolyte and then sealing the case with the cap assembly 300. The electrolyte includes lithium salt and non-aqueous organic solvent. The electrolyte may further include one or more additives to improve charging/discharging properties or prevent overcharging. The lithium salt functions as a lithium ion supplier in the battery to allow basic operation of the lithium battery. The non-aqueous organic solvent functions as a medium through which ions involving in electrochemical reactions of the battery travel within the battery.

In embodiments, the lithium salt may be one or more selected from a group of LiPF₆, LiBF₄, LiSbF₆, LiAsF₆, LiClO₄, LiCF₃SO₃, LiN(SO₂CF₃)₂, LiN(SO₂C₂F₅)₂, LiC(SO₂CF₃)₃, LiN(SO₃CF₃)₂, LiC₄F₉SO₃, LiAlO₄, LiAlCl₄, LiCl, LiI and a mixture of two or more foregoing compounds. In embodiments, the non-aqueous organic solvent may an organic compound with one or more substituent groups of carbonate, ester, ether, and ketone. Further, it may be preferable to use a mixture of two or more solvents. For example, a mixture can include a solvent having a high dielectric constant and high viscosity and another solvent having a low dielectric constant and low viscosity, which may achieve smooth ion transmission by increasing dissociation of the ions.

It is preferable to mix and use a cyclic carbonate solvent with a chain carbonate solvent for the carbonate-based solvent in the non-aqueous solvents. For example, cyclic carbonate solvents include ethylene carbonate, propylene carbonate, 1,2-butylene carbonate, 2,3-butylene carbonate, 1,2-penthylene carbonate, 2,3-penthylene carbonate, and vinylene carbonate. The ethylene carbonate and propylene carbonate which have high a dielectric constant are preferred, and the ethylene carbonate is even more preferred, when synthetic graphite is used for the cathode active material. For example, chain carbonate solvents include dimethly carbonate, diethyl carbonate, dipropyl carbonate, methylpropyl carbonate, ethylmethyl carbonate, and ethlypropyl carbonate. Dimethly carbonate, ethylmethyl carbonate, and diethyl carbonate are particularly preferred.

The ester solvents may be methyl acetate, ethyl acetate, propyl acetate, methyl propionate, ethyl propionate, γ-butyrolactone, γ-balerolactone, γ-caprolactone, δ-balerolactone, and ε-caprolactone etc. Further, the ether solvents may be tetrahydrofuran, 2-methyltetrahydrofuran, and dibutylether. The ketone solvents may be polymethylvinyl ketone etc.

### EXAMPLES

Now various features are further discussed by way of examples.

### Example 1

Lithium cobalt oxide (anode active material), polyvinylidene fluoride (binder), and acetylene black (conductive agent) were mixed at a ration by weight, 92:4:4. A slurry including the anode active material was produced by diffusing the mixed substances in NMP (N-Methyl-2-Pyrrolidone). An anode plate was manufactured by applying the slurry onto an aluminum foil having a thickness of 20 µm, and drying and rolling it. An electrode lead (first electrode lead) was attached to the uncoated part of the anode plate.

Synthetic graphite (cathode active material), styrene-butadiene rubber (binder), and carboxymethylcellulose (thickener) were mixed at a ratio by weight, 96:2:2. A slurry containing the cathode active material was produced by diffusing the mixture in water. A cathode plate was manufactured by coating the slurry onto copper foil having a thickness of 15 µm, and drying and rolling it. An electrode lead (second electrode lead) was attached to the uncoated part of the anode plate.

A separator film made of polyethylene having a thickness of 20 µm was interposed between the manufactured anode plate and cathode plate. In this configuration, the porosity of the separator was 45% and the air permeability was 200 sec/100cc. The electrode assembly was completed by spirally winding the electrode plate and the separator interposed between the electrode plates. The electrode assembly was inserted in a rectangular can, with the first and second electrode leads, which are drawn out from the electrode assembly, at the upper portion. The electrode leads were attached to the lower portion of the cathode plate and the cap assembly and then the opening of the rectangular can was sealed by the cap assembly. A lithium secondary battery was manufactured by injecting an electrolyte through the electrolyte injection hole of the cap assembly and then sealing the electrolyte injection hole. A liquid mixture of ethylene carbonate containing LiPF₆ of 0.5M and ethylmethyl carbonate (volume ratio, 3:7) was used for the electrolyte.

### Example 2

It was performed under the same conditions of Example 1, except that the electrolyte was a liquid mixture of ethylene carbonate containing LiPF₆ of 0.6M and ethylmethyl carbonate (volume ratio of 3:7).

### Example 3

It was performed under the same conditions of Example 1, except that the electrolyte was a liquid mixture of ethylene carbonate containing LiPF₆ of 0.7M and ethylmethyl carbonate (volume ratio of 3:7).

### Example 4

It was performed under the same conditions of Example 1, except that the electrolyte was a liquid mixture of ethylene carbonate containing LiPF₆ of 0.8M/ethylmethyl carbonate (volume ratio of 3:7).

### Example 5

It was performed under the same conditions of Example 1, except that the electrolyte was a liquid mixture of ethylene carbonate containing LiPF₆ of 0.9M/ethylmethyl carbonate (volume ratio of 3:7).

### Example 6

It was performed under the same conditions of Example 1, except that the electrolyte was a liquid mixture of ethylene carbonate containing LiPF₆ of 1.0M/ethylmethyl carbonate (volume ratio of 3:7).

### Example 7

It was performed under the same conditions of Example 1, except that the used separator film had air permeability of 110 sec/100cc.

### Example 8

It was performed under the same conditions of Example 1, except that the used separator film had air permeability of 100 sec/100cc.

### Example 9

It was performed under the same conditions of Example 1, except that the used separator film had air permeability of 95 sec/100cc.

### Example 10

It was performed under the same conditions of Example 1, except that the used separator film had air permeability of 75 sec/100cc.

### Comparative example 1

It was performed under the same conditions of Example 1, except that the electrolyte was a liquid mixture of ethylene carbonate containing LiPF₆ at a concentration of 1.1 M and ethylmethyl carbonate (volume ratio of 3:7).

### Comparative example 2

It was performed under the same conditions of Example 1, except that the electrolyte was a liquid mixture of ethylene carbonate containing LiPF₆ at a concentration of 1.15M and ethylmethyl carbonate (volume ratio of 3:7).

### Comparative example 3

It was performed under the same conditions of Example 1, except that the electrolyte was a liquid mixture of ethylene carbonate containing LiPF₆ at a concentration of 1.2M and ethylmethyl carbonate (volume ratio of 3:7).

### Comparative example 4

It was performed under the same conditions of Example 1, except that the electrolyte was a liquid mixture of ethylene carbonate containing LiPF₆ at a concentration of 1.3M and ethylmethyl carbonate (volume ratio of 3:7).

### Comparative example 5

It was performed under the same conditions of Example 1, except that the used separator film had air permeability of 70 sec/100cc.

### Comparative example 6

It was performed under the same conditions of Example 1, except that the used separator film had air permeability of 50 sec/100cc.

### Comparative example 7

It was performed under the same conditions of Example 1, except that the used separator film had air permeability of 220 sec/100cc.

### Comparative example 8

It was performed under the same conditions of Example 1, except that the used separator film had air permeability of 250 sec/100cc.

### Capacity Examination and Compression Test

The capacity was examined and compression property was tested in the features of the secondary batteries of Examples 1 to 10 and Comparative examples 1 to 8.

### 1. Capacity examination

The secondary batteries manufactured in Examples and Comparative examples were examined for their capacity. The secondary batteries were charged with static current-static voltage at 1C/2.4V for 3 hours under room temperature by a charger/discharger. Thereafter, the charged secondary batteries were discharged at 1C/2.75V. The discharging capacity after charging under the conditions was shown as percentage of capacity of the secondary batteries in Table 1 and Table 2.

### 2. Compression property examination

The secondary batteries manufactured in Examples and comparative examples were charged with static current-static voltage at 1C/2.4V for 3 hours. The fully charged secondary batteries were placed between two flat surfaces and compressed by a hydraulic ram having a piston having a diameter of 1.25 inch (32 mm). The compression was continuously applied to the secondary batteries of 3000 pounds (13 kN), until the pressure reached to 2500 psi (17.2 MPa). The state of the secondary batteries was checked after the compression test, and the result was shown in Table 1 and Table 2. When the state of the secondary batteries was not accompanied with leakage and thermal runaway, the state was good in the compression test and shown by 'OK' in Table 1 and Table 2. On the contrary, when the state of the secondary batteries were fired or broken, the state did not pass the compression test and was shown by 'NG' in Table 1 and Table 2.

Hereinafter, the Examples and comparative examples described above are examined on the basis of Table 1 and Table 2.

**[Table 1] Compression test result to lithium salt concentration**

| | LiPF6 concentration (M) | Air permeability (sec/100cc) | Capacity (%) | Compression test | |
|---|---|---|---|---|---|
| | | | | OK | NG |
| Example 1 | 0.5 | 200 | 60 | 10 | 0 |
| Example 2 | 0.6 | 200 | 70 | 10 | 0 |
| Example 3 | 0.7 | 200 | 95 | 10 | 0 |
| Example 4 | 0.8 | 200 | 102 | 10 | 0 |
| Example 5 | 0.9 | 200 | 102 | 8 | 2 |
| Example 6 | 1.0 | 200 | 102 | 7 | 3 |
| Comparative Example 1 | 1.1 | 200 | 102 | 5 | 5 |
| Comparative Example 2 | 1.15 | 200 | 102 | 5 | 5 |
| Comparative Example 3 | 1.2 | 200 | 102 | 3 | 7 |
| Comparative Example 4 | 1.3 | 200 | 102 | 3 | 7 |

**[Table 2] Compression test result to air permeability**

| | LiPF6 concentration (M) | Air permeability (sec/100cc) | Capacity (%) | Compression test | |
|---|---|---|---|---|---|
| | | | | OK | NG |
| Example 6 | 1.0 | 200 | 102 | 7 | 3 |
| Example 7 | 1.0 | 110 | 102 | 8 | 2 |
| Example 8 | 1.0 | 100 | 102 | 10 | 0 |
| Example 9 | 1.0 | 95 | 102 | 10 | 0 |
| Example 10 | 1.0 | 75 | 102 | 10 | 0 |
| Comparative Example 5 | 1.0 | 70 | 103 | 5 | 5 |
| Comparative Example 6 | 1.0 | 50 | 102 | 0 | 10 |
| Comparative Example 7 | 1.0 | 220 | 70 | 5 | 5 |
| Comparative Example 8 | 1.0 | 250 | 70 | 5 | 5 |

Table 1 shows the result of using a separator having air permeability of 200 sec/100cc and examining capacity and compression property of the secondary batteries while changing concentration of LiPF₆ in the electrolyte, that is, concentration of lithium salt in said electrolyte.

It can be seen that the compression property increased with the decrease in concentration of the lithium salt. In detail, in Examples 1 to 6, the result of testing capacity and compression, while gradually decreasing concentration of the lithium salt by 0.1 M from 0.5 M to 1.0 M, was as follows. It can be seen that a half or more secondary batteries passed the compression test, when the concentration of the lithium salt was 0.5 M to 1.0 M. In particular, in Examples 1 to 4, all the tested secondary batteries passed the compression test, when the concentration of the lithium salt was 0.5 M to 0.8 M. On the contrary, in comparative examples 1 to 4, only 50% of the tested secondary batteries passed the compression test, when the concentration of the lithium salt was of 1.1 M or more. Further, it can be seen that the higher the concentration of the lithium salt, the fewer the number of secondary batteries passing the compression test.

Meanwhile, in Examples 1 to 3, it can be seen that the capacity of the secondary batteries did not reach 100% of the designed capacity of the secondary batteries, when the concentration of the lithium salt was 0.7 M or less. On the contrary, for Examples 4 to 6 and comparative examples 1 to 4, it can be seen that a capacity close to the designed capacity was achieved, when the concentration of the lithium salt was 0.8 M or more. However, it can be seen that the results in terms of capacity were similar, even if the concentration of the lithium was from 0.9 M to 1.3 M.

Table 2 shows the result or examining capacity and compression property of the secondary batteries while changing air permeability of the separator of the electrode assembly, under the same conditions in terms of concentration of LiPF₆ in the electrolyte ( 0.1 M).

Referring to Table 2, it can be seen that the secondary batteries passed the compression test, when the air permeability of the separator was of 75 sec/100cc to 200 sec/100cc. The number of secondary batteries passing the compression test increased, when the air permeability of the separator decreased from 200 sec/100cc to 75 sec/100cc in Examples 1 to 6. In particular, as in Examples 8 to 10, it can be seen that all of the tested secondary batteries passed the compression test, when the air permeability of the separator was of 75 sec/100cc to 100 sec/100cc. On the contrary, referring to comparative examples 5 and 6, when the air permeability of the separator was 70 sec/100cc or less, the separator was likely to cause a short circuit. Therefore, it can be seen that the secondary batteries did not pass the compression test, when the air permeability of the separator was of 70 sec/100cc or less. Further, referring to comparative examples 7 and 8, when the air permeability of the separator was 220 sec/100cc or more, the heat generated in said secondary batteries did not dissipate correctly. Therefore, it can be seen that a half or more secondary batteries did not pass the compression test.

That is, referring to Table 1 and Table 2, the less the concentration of the lithium salt in the electrolyte, the better the compression property .But the capacity of the secondary battery decreased when the concentration of the lithium salt was too low. Further, the higher the air permeability of the separator, the higher the compression property of the secondary battery. It can be seen that the compression property of the secondary battery was unacceptable, when the air permeability was 70 sec/100cc or less, or 200 sec/100cc or more.

As described above, considering the capacity and compression property of the secondary batteries, the concentration of the lithium salt in the electrolyte of the secondary battery according to the invention, is advantageously 0.5 M to 1.0 M, preferably from 0.8 to 1.0 M. Further, the air permeability of the separator in the secondary battery according to the invention, is advantageously75 sec/100cc to 200 sec/100cc, preferably, 75 sec/100cc to 100 sec/100cc.

While the present invention has been described in connection with certain exemplary Examples, it is to be understood that the invention is not limited to the disclosed Examples, but, on the contrary, is intended to cover various modifications and equivalent arrangements included within the spirit and scope of the appended claims, and equivalents thereof.

## Claims

1. A secondary battery (10) comprising:
an electrode assembly (100) comprising a first electrode plate (110), a second electrode plate (120) and a separator (130) interposed between the first and second electrode plates;
an electrolyte comprising an organic solvent and a lithium salt at a concentration of about 0.5 M to about 1 M in the organic solvent; and
a case (200) accommodating the electrode assembly (100) and the electrolyte therein.

2. The secondary battery (10) as claimed in claim 1, wherein the porosity of the separator (130) is from about 25 % to about 65 %, preferably from about 40 % to about 50%.

3. The secondary battery (10) as claimed in any one of claims 1 and 2, wherein the air permeability of the separator (130) is from about 75 sec/100 cc to about 200 sec/100 cc, preferably from about 75 sec/100 cc to about 100 sec/100 cc.

4. The secondary battery (10) as claimed in any one of claims 1 to 3, wherein the lithium salt is at least any one selected from the group consisting of LiPF₆, LiBF₄, LiSbF₆, LiAsF₆, LiClO₄, LiCF₃SO₃, LiN(SO₂CF₃)₂, LiN(SO₂C₂F₅)₂, LiC(SO₂CF₃)₃, LiN(SO₃CF₃)₂, LiC₄F₉SO₃, LiAlO₄, LiAlCl₄, LiCl and LiI.

5. The secondary battery (10) as claimed in any one of claims 1 to 4, wherein the lithium salt is LiPF₆.

6. The secondary battery (10) as claimed in any one of claims 1 to 5, wherein the lithium salt has a concentration from about 0.8 M to about 1.0 M in the organic solvent.

7. The secondary battery (10) as claimed in any one of claims 1 to 6, wherein the electrolyte comprises a non-aqueous organic solvent.

8. The secondary battery (10) as claimed in any one of claims 1 to 7, wherein the organic solvent comprises at least one selected from the group consisting of a carbonate solvent, an ether solvent, an ester solvent, and a ketone solvent.

9. The secondary battery (10) as claimed in claim 8, wherein the carbonate solvent is at least one selected from the group consisting of dimethly carbonate, diethyl carbonate, dipropyl carbonate, methylpropyl carbonate, ethylmethyl carbonate, ethlypropyl carbonate, ethylene carbonate, propylene carbonate, 1,2-butylene carbonate, 2,3-butylene carbonate, 1,2-penthylene carbonate and 2,3-penthylene carbonate.

10. The secondary battery (10) as claimed in any one of claims 8 and 9, wherein the ester solvent is at least one selected from the group consisting of methyl acetate, ethyl acetate, propyl acetate, methyl propionate, ethyl propionate, γ-butyrolactone, γ-balerolactone, γ-caprolactone, δ-balerolactone, and ε-caprolactone.

11. The secondary battery (10) as claimed in any one of claims 8 to 10, wherein the ether solvent is at least one selected from the group consisting of tetrahydrofuran, 2-methyltetrahydrofuran, and dibutylether.

12. The secondary battery (10) as claimed in any one of claims 8 to 11, wherein the ketone solvent is polymethylvinyl ketone.

13. The secondary battery (10) as claimed in any one of claims 1 to 12, wherein the first electrode plate (110) comprises a first current collector and a first active material layer formed on a portion of the first current collector, while the first active material layer is not formed on another portion of the first current collector.

14. The secondary battery (10) as claimed in any one of claims 1 to 13, wherein the second electrode plate (120) comprises a second current collector and a second active material layer formed on a portion of the second current collector, while the second active material layer is not formed on another portion of the second current collector.
